# EUROPÄISCHE PATENTSCHRIFT

(11) **EP 0 782 547 B1**
(45) Veröffentlichungstag und Bekanntmachung des Hinweises auf die Patenterteilung: **11.11.1998**
(21) Anmeldenummer: 95932726.3
(22) Anmeldetag: 12.09.1995
(51) Int. Cl.: C02F 1/66, C02F 1/58

(54) **NITRATRÜCKGEWINNUNGSANLAGE**
NITRATE RECOVERY FACILITY
UNITE DE RECUPERATION DE NITRATE

(30) Priorität: 15.09.1994 DE 4432840
(43) Veröffentlichungstag der Anmeldung: 09.07.1997
(73) Patentinhaber: Dynamit Nobel GmbH Explosivstoff- und Systemtechnik, 53840 Troisdorf (DE)
(72) Erfinder: DANZMANN, Erich, D-59192 Bergkamen (DE); TRAUTMANN, Wilhelm-Heinrich, D-57299 Burbach (DE); MUSKULUS, Bernd, D-57299 Burbach (DE); NEITZERT, Bernd, D-57537 Wissen (DE); ZIPS, Frank, D-35713 Eschenburg (DE)
(74) Vertreter: Uppena, Franz, Dr.
(86) Internationale Anmeldenummer: EP9503590
(87) Internationale Veröffentlichungsnummer: WO9608447

(56) Entgegenhaltungen:
- EP-A- 0 634 365
- WO-A-92/18426

## Beschreibung

Die Erfindung betrifft ein Verfahren zur Eliminierung von anorganischen und/oder oxidierbaren Stickstoffverbindungen in industriellen Abwässern unter gleichzeitiger Nutzung der in den Abwässern enthaltenen Stickstoffverbindungen als industrielle Wertstoffe.

13% des Stickstoffeintrags von 790.000 t N/a in der Bundesrepublik Deutschland im Jahre 1986 entfielen auf industrielle Direkteinleitungen (Wieting, J.; Wolf, P.: Wasser Boden 10 (1990) S. 646-648). Die Gefährdung der Gewässerökologie durch Stickstoffverbindungen besteht insbesondere in der eutrophierenden Wirkung des eingeleiteten Ammoniums, Nitrits und Nitrats. Durch die Nahrungsaufnahme dieser Stoffe über belastete Grundwasser wird beispielsweise das Krebsrisiko aufgrund der cancerogenen Wirkung von Nitrosaminen deutlich erhöht. Aus diesem Grund ist man bestrebt, die Konzentration dieser Stoffe so gering wie eben möglich zu halten. Bisher werden dazu biologische Behandlungsmethoden und zwar die Nitrifikation und die Denitrifikation eingesetzt. Reaktionsendprodukt ist dabei elementarer Stickstoff, der in die Atmosphäre entweicht. Der Nachteil dieser Behandlungsmethoden besteht darin, daß an sich für die Industrie wertvolle Stoffe wie Nitrat und Ammonium damit dem industriellen Einsatz entzogen werden. Außerdem führt diese Methode zu Schlammaufkommen mit zusätzlichen Entsorgungsproblemen.

Bei vielen chemischen Reaktionsprozessen, so beispielsweise auch bei der Herstellung von Salpetersäureestern, z.B. Glycerintrinitrat, Ethylenglykoldinitrat u.ä. oder Nitroaromaten, z.B. Trinitrotoluol, Nitrobenzol u.ä. fallen aus der anschließenden Produktwäsche ebenso wie auch bei NOₓ-Wäschen Abwässer an, die in erhöhtem Maße Nitrate und andere Stickstoffverbindungen enthalten. Diese, im Normalfall sauren Abwässer, werden in der Regel mit Natronlauge oder Kalkmilch neutralisiert, bevor sie der Kläranlage zugeführt werden. Die bei der Neutralisation entstehenden Nitrate und Nitrite, sowie die übrigen stickstoffhaltigen Verbindungen gehen dabei nicht nur ungenutzt verloren, sie belasten darüber hinaus die biologischen Kläranlagen und die Vorfluter.

Die biologische Reinigung solcher Abwässer ist durch den hohen Gehalt an anorganischem Nitrat zu einem für die Industrieeinleiter insbesondere finanziellen Problem geworden, da die Kostenlast der Abwasserbehandlung durch Kostenübernahme von Investitionen der Abwasserverbände, steigende Abwassergebühren und -abgaben und anteilige Betriebskosten immer stärker zunimmt.

Aufgabe der vorliegenden Erfindung war es, ein Verfahren zur Eliminierung von anorganischen und/oder oxidierbaren Stickstoffverbindungen in industriellen Abwässern bereitzustellen, unter gleichzeitiger Nutzung der in den Abwässern enthaltenen Stickstoffverbindungen als industrielle Wertstoffe.

Erfindungsgemäß wird der Gehalt an anorganischem Nitrat dadurch eliminiert, daß der Nitratanteil als wiederverwertbarer Wertstoff dem Abwasser entzogen wird. Dies wird dadurch erreicht, daß das saure Abwasser auf etwa pH 7 neutralisiert wird, wobei Natronlauge oder Ammoniak, vorzugsweise Ammoniak als Neutralisationsmittel eingesetzt wird. Die neutralisierte Lösung wird anschließend eingedampft. Bei Verwendung von Ammoniak als Neutralisationsmittel kann erfindungsgemäß sowohl Ammoniakgas, als auch Ammoniaklösung bzw. Ammoniakwasser verwendet werden. Der Vorteil des Ammoniakgases besteht darin, daß es leicht zu beschaffen ist und bei der Neutralisationsreaktion keinen zusätzlichen Wasseranteil einbringt. Nachteilig ist, daß die Neutralisationsbehälter absolut gasdicht sein müssen und daß insgesamt ein erhöhter Aufwand an MSR-Technik notwendig ist. Ammoniaklösung bzw. Ammoniakwasser dagegen ist relativ unproblematisch und ungefährlich zu behandeln. Insbesondere vorteilhaft ist der Umstand, daß die auch bei der Neutralisation mit Natronlauge verwendeten Anlagenteile beim Einsatz von Ammoniaklösung bzw. -wasser ebenfalls Verwendung finden können. Es konnte überraschenderweise festgestellt werden, daß bei Neutralisation eines nitrathaltigen Abwassers mit Ammoniakwasser auf pH etwa 7 und anschließender Eindampfung ein bis zu 80%iges Ammonsalpeterkonzentrat zu erhalten ist, das beispielsweise direkt in das Herstellungsverfahren von Emulsionssprengstoffen eingeschleust werden kann oder beispielsweise auch als Basis für die Düngemittelherstellung dienen kann. Das anfallende Konzentrat läßt sich in den Kreislauf zurückführen. Um beim Eindampfen der neutralisierten Lösung die autokatalytische und thermische Zersetzung der Nitrate bei niedrigem pH wirksam zu verhindern, sollte der pH stabilisiert werden.

Enthält das Abwasser neben Nitrat auch noch Nitrit, Ammonium und/oder nitrose Gase, ist das oben beschriebene Verfahren nur bedingt einsetzbar, da sich diese Stoffe durch die Neutralisation nicht beseitigen bzw. nutzbar machen lassen. Bei Abwässern, die diese Verunreinigungen enthalten, enthält das beim Eindampfen entstehende Kondensat durch Mitschleppen der Gase NOₓ und Ammoniak einen so hohen Anteil an Gesamt-Stickstoff, daß das Kondensat nicht ohne vorhergehende biologische Klärung verwendet bzw. entsorgt werden kann. Dieses Problem läßt sich überraschenderweise dadurch lösen, daß der Neutralisation eine Oxidation vorgeschaltet wird. Durch diese Verfahrensweise wird das im Abwasser enthaltene Nitrit zu Nitrat oxidiert, wodurch der Gehalt an giftigem Nitrit auf ein Minimum gesenkt wird, während gleichzeitig mehr verwertbares Nitrat zur Verfügung steht. Zudem werden durch die Oxidationsmittelzugabe, beispielsweise durch die Wasserstoffperoxidzugabe das ebenfalls giftige, im pH-Gleichgewicht mit NH₃ stehende Ammonium und die nitrosen Gase (NOₓ) oxidiert. Eventuell vorhandene organische Verunreinigungen werden gleichzeitig durch Oxidation zu Kohlendioxid und Wasser beseitigt. Als Oxidationsmittel lassen sich Ozon, Sauerstoff und Wasserstoffperoxidlösung einsetzen. Besonders bevorzugt ist Wasserstoffperoxidlösung, da selbst bei einer Überdosierung Wasserstoffperoxid umweltfreundlich in Wasser und Sauerstoff zerfällt und die technische Realisierung keine Probleme bereitet. Gleichzeitig wird bei der Verwendung von Wasserstoffperoxid als Oxidationsmittel der CSB reduziert. Auf diese Weise lassen sich nicht nur bessere Ausbeuten an Ammonsalpeter erzielen, sondern es läßt sich außerdem ein Kondensat erhalten, das einen erheblich reduzierten Gesamt-Stickstoffgehalt aufweist. Dieses Kondensat läßt sich vorzugsweise als Waschwasser in die Produktion zurückführen oder kann in günstigen Fällen auch direkt in den Vorfluter eingeleitet werden. Eventuell noch vorhandener Ammoniak wird dem Kondensat durch Strippen entzogen und erneut zur Neutralisation eingesetzt. Der Oxidationsprozeß wird vorzugsweise on-line überwacht, wodurch die notwendige Menge an Oxidationsmittel ermittelt und entsprechend zudosiert werden kann. Enthält das Abwasser explosionsgefährliche und/oder giftige organische Nitrate wird vor der Neutralisationsstufe aus Sicherheits- oder Umweltschutzgründen eine thermische Vorbehandlung entsprechend DE 38 13 184 durchgeführt.

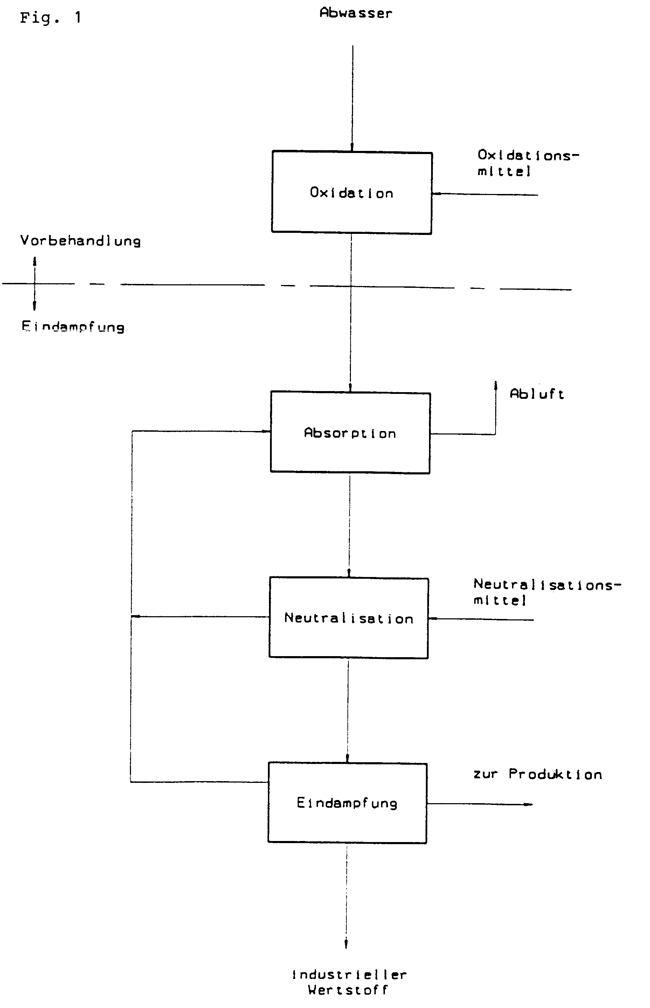

Das erfindungsgemäße Konzept wird anhand des in Figur 1 gezeigten Fließschemas an einem speziellen Abwasser näher erläutert.

Für die Durchführung des erfindungsgemäßen Verfahrens sind an sich bekannte Verdampfungsanlagen verwendbar. Als Anlage kann eine ein- oder mehrstufige Eindampfungsanlage verwendet werden, beispielsweise eine 4-stufige, kontinuierlich arbeitende Fallstromeindampfanlage. Je nach Zusammensetzung des Abwassers läßt sich die Anlage mit oder ohne vorgeschaltete Oxidationsstufe betreiben.

Die vorliegende Erfindung ermöglicht damit eine ökologisch sinnvolle Reinigung von mit Stickstoffverbindungen belasteten Abwässern unter gleichzeitiger Wiederverwertung dieser wertvollen Stickstoffverbindungen.

## Patentansprüche

1. Verfahren zur Eliminierung von anorganischen Stickstoffverbindungen in Abwässern, dadurch gekennzeichnet, daß das Abwasser auf etwa pH 7 neutralisiert wird, wobei als Neutralisationsmittel Natronlauge oder Ammoniak, vorzugsweise Ammoniak in Form von Gas oder Lösung eingesetzt wird und die als Nitrat vorliegenden Stickstoffverbindungen dem Abwasser in Form des entsprechenden Nitrates durch Eindampfen entzogen werden.

2. Verfahren zur Eliminierung von oxidierbaren Stickstoffverbindungen in Abwässern, dadurch gekennzeichnet, daß die in dem Abwasser befindlichen oxidierbaren stickstoffhaltigen Inhaltsstoffe oxidiert werden, daß das so behandelte Abwasser anschließend auf etwa pH 7 neutralisiert wird, wobei als Neutralisationsmittel Natronlauge oder Ammoniak, vorzugsweise Ammoniak in Form von Gas oder Lösung eingesetzt wird und das vorhandene und entstandene Nitrat in Form der entsprechenden Nitrate durch Eindampfen dem Abwasser entzogen wird.

3. Verfahren gemäß Anspruch 2, dadurch gekennzeichnet, daß als Oxidationsmittel Ozon, Sauerstoff oder Wasserstoffperoxid, vorzugsweise Wasserperoxid eingesetzt wird.

4. Verfahren gemäß Anspruch 2 oder 3, dadurch gekennzeichnet, daß dem Abwasser vor dem Eindampfen pH-Stabilisierungsmittel zugesetzt werden.

5. Verfahren gemäß einem der Ansprüche 2 bis 4, dadurch gekennzeichnet, daß der Oxidationsprozeß on-line überwacht und das Oxidationsmittel nach Bedarf zudosiert wird.

## Claims

1. Method for eliminating inorganic nitrogen compounds in waste waters, characterized in that the waste water is neutralized to approximately pH 7, with caustic soda or ammonia, preferably ammonia in the form of gas or solution, being used as neutralization agent, and with the nitrogen compounds which are present as nitrate being extracted by means of evaporation from the waste water in the form of the corresponding nitrate.

2. Method for eliminating oxidizable nitrogen compounds in waste waters, characterized in that the oxidizable nitrogen-containing components which are present in the waste water are oxidized, in that the waste water which is treated in this way is subsequently neutralized to approximately pH 7, with caustic soda or ammonia, preferably ammonia in the form of gas or solution, being used as neutralization agent, and with the existing and produced nitrate being extracted from the waste water by means of evaporation in the form of the corresponding nitrates.

3. Method according to claim 2, characterized in that ozone, oxygen or hydrogen peroxide, preferably hydrogen peroxide, is used as oxidising agent.

4. Method according to claim 2 or 3,
characterized in that pH stabilization agents are added to the waste water before the evaporation.

5. Method according to one of claims 2 to 4, characterized in that the oxidation process is monitored on-line and the oxidising agent is added as required.

## Revendications

1. Procédé permettant d'éliminer des composés inorganiques azotés présents dans des eaux résiduaires, caractérisé en ce qu'on neutralise l'eau résiduaire, en en amenant le pH à environ 7, en utilisant comme agent de neutralisation de la lessive de soude ou de l'ammoniac, de préférence de l'ammoniac sous forme de gaz ou en solution, et en ce qu'on enlève de l'eau résiduaire par évaporation, sous la forme du nitrate correspondant, les composés azotés présents en tant que nitrate.

2. Procédé permettant d'éliminer des composés azotés oxydables présents dans des eaux résiduaires, caractérisé en ce qu'on oxyde les matières azotées oxydables contenues dans l'eau résiduaire, en ce qu'on neutralise ensuite l'eau résiduaire ainsi traitée, en en amenant le pH à environ 7, en utilisant comme agent de neutralisation de la lessive de soude ou de l'ammoniac, de préférence de l'ammoniac sous forme de gaz ou en solution, et en ce qu'on enlève de l'eau résiduaire par évaporation, sous la forme des nitrates correspondants, le nitrate présent et le nitrate formé.

3. Procédé conforme à la revendication 2, caractérisé en ce qu'on emploie, comme agent oxydant, de l'ozone, de l'oxygène ou du peroxyde d'hydrogène, et de préférence du peroxyde d'hydrogène.

4. Procédé conforme à la revendication 2 ou 3, caractérisé en ce qu'on ajoute à l'eau résiduaire, avant l'évaporation, un agent de stabilisation du pH.

5. Procédé conforme à l'une des revendications 2 à 4, caractérisé en ce qu'on surveille en direct le déroulement de l'oxydation et en ce qu'on ajoute l'agent oxydant en quantité ajustée aux besoins.
